# EUROPEAN PATENT APPLICATION

(11) **EP 2 256 968 A2**
(43) Date of publication of application: **01.12.2010**
(21) Application number: 09722016.4
(22) Date of filing: 17.03.2009
(51) Int. Cl.: H04H 60/82

(54) **IP BROADCASTING RECEIVER AND METHOD FOR PROVIDING IP BROADCASTING RECEIVER SERVICE**

(30) Priority: 18.03.2008 KR 20080024827
(71) Applicant: Humax Co., Ltd., Seongnam-si, Gyeonggi-do 463-825 (KR)
(72) Inventor: SONG, Dongseop, Seongnam-si Gyeonggi-do 463-805 (KR)
(74) Representative: TER MEER - STEINMEISTER & PARTNER GbR
(86) International application number: PCT/KR2009/001312
(87) International publication number: WO 2009/116771

(57) **Abstract**

An IP broadcast receiver and a method for providing a service in the IP broadcast receiver are disclosed. Information related to an IP broadcast and/or the IP broadcast receiver is provided to a terminal connected to a communication network via a server unit provided in the IP broadcast receiver, and a service related to the IP broadcast and/or the IP broadcast receiver may be performed according to a request from the terminal. Information provided to the terminal may include a menu allowing a user to select one or more services from among an EPG service, a reservation service, a history service, a contents uploading/downloading service. A menu screen image may be provided with a resolution corresponding to the connected terminal. Thus, the operations related to the IP broadcast receiver, e.g., EPG checking, reservation record, reservation watch, history checking, contents uploading/downloading, and the like, can be remotely simply performed, thus enhancing user convenience.

## Description

### Technical Field

The present invention relates to an IP broadcasting receiver and method for providing a service in the IP broadcasting receiver.

### Background Art

An IP broadcasting receiver, such as an IP-television (IP-TV) or an IP-set top box (IP-STB) that receives various types of contents and broadcast program data via the Internet, includes an Internet module.

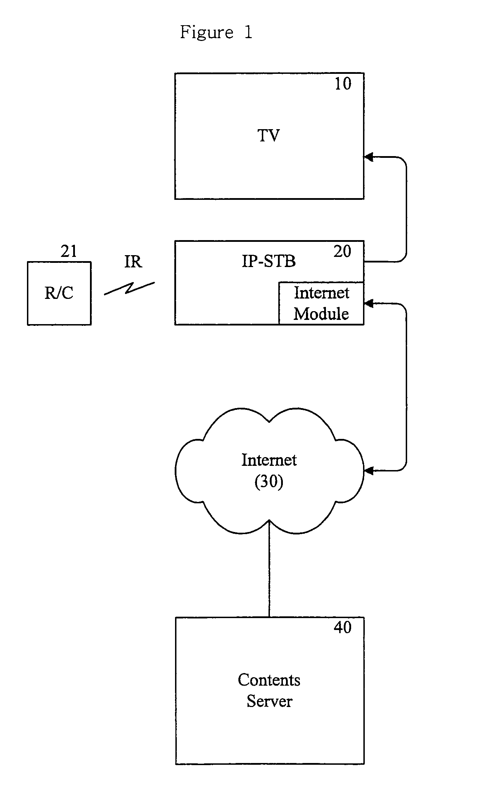

For example, as shown in FIG. 1, an IP-STB 20 including the Internet module is connected to a TV 10 and to a contents providing server 40 of an Internet broadcast station providing various contents and broadcast program data via the Internet 30.

With reference to FIG. 1, when a user requests a broadcast program guide service by manipulating an input device, e.g., a remote controller R/C 21, the IP-STB 20 processes electronic program guide (EPG) data provided by the contents providing server 40 to generate an EPG image including a broadcast channel, a broadcast time, the title of a broadcast program, and the like.

In addition, the IP-STB 20 outputs the generated EPG image to the TV 10 so that an EPG screen image for guiding broadcast programs can be displayed. And then, when the user requests setting of reservation record in a state that he has selected a broadcast program by manipulating the remote controller 21, the IP-STB 20 stores and manages a broadcast channel, a broadcast time, and the title of the broadcast program corresponding to the selected broadcast program as reservation record data.

If a current time is consistent with the broadcast time stored as the reservation record data, the IP-STB 20 selects the corresponding broadcast channel by performing an interfacing operation with the contents providing server 40, and performs an operation of recording broadcast program data received via the broadcast channel in a storage such as a hard disk (HDD).

However, in order to set the reservation record in the IP broadcast receiver such as the general IP TV or the IP-STB, the user should personally manipulate the remote controller in an area where the corresponding IP broadcast receiver is installed, to request the broadcast program guide service, selects his desired broadcast program through the EPG screen image displayed on the TV, and then sets the reservation record. That is, if the user is away from the IP broadcast receiver, he cannot set the reservation record.

### Technical Problem

Therefore, an object of the present invention is to provide a method and apparatus for providing diverse services related to an IP broadcast receiver such as remotely setting reservation record, reservation watch, and the like, in an IP broadcast receiver.

### Technical Solution

To achieve the above object, there is provided a method for providing a service in an IP broadcast receiver, including: providing, via a server unit provided in the IP broadcast receiver, information related to an IP broadcast and/or the IP broadcast receiver to a terminal connected to a communication network; and performing a service related to the IP broadcast and/or the IP broadcast receiver according to a request of the terminal.

To achieve the above object, there is also provided an IP broadcast receiver including: a communication module configured to connect to and transmit/receive data to/from a terminal and a convents server via a communication network; a server unit configured to provide one or more services among an EPG service, a reservation service, a history service, and contents service related to an IP broadcast and/or the IP broadcast receiver via an interface with the terminal; and a storage unit configured to store the IP broadcast program and the service-related information.

The information provided to the terminal may include a menu for allowing a user to select one or more services from among an EPG service, a reservation service, a history service, a contents uploading/downloading service.

A menu screen image of a resolution corresponding to the connected terminal may be provided.

The performing a service may include: when the EPG service is requested through the menu, searching and reading EPG information corresponding to a current time from a database of the receiver, or receiving the EPG information corresponding to a current time from the contents server connected via the Internet and providing the EPG information to the terminal. At this time, if reservation record or reservation watch with respect to at least one program selected from the EPG information is requested by the terminal, broadcast information with respect to the selected program may be stored as reservation record data or reservation watch data.

The performing a service may include: if the reservation service is requested through the menu, providing reservation record data or reservation watch data set in the receiver to the terminal.

The performing a service may include: when the history service is requested through the menu, providing history data managed in the receiver to the terminal.

The performing of the service may include: when the contents uploading/downloading service is requested through the menu, providing a list of the contents data stored in the receiver to the terminal, and downloading contents selected from the list or uploading contents stored in the terminal.

### Advantageous Effects

Therefore, in the present invention, the operations related to the IP broadcast receiver, for example, EPG checking, reservation record, reservation watch, history checking, contents uploading/downloading, and the like, can be simply performed remotely, improving user convenience.

### Description of Drawings

FIG. 1 illustrates a general IP broadcast receiver connected to a contents providing server.
FIG. 2 illustrates an IP broadcast receiver connected to a contents server and a remote terminal according to an embodiment of the present invention.
FIG. 3 illustrates the configuration of the IP broadcast receiver according to an embodiment of the present invention.
FIG. 4 illustrates a log-in screen image and a main menu screen image according to an embodiment of the present invention.
FIG. 5 illustrates screen images related to an EPG service providing EPG information.
FIG. 6 illustrates screen images related to a reservation service providing reservation information.
FIG. 7 illustrates a screen image related to a contents service for uploading or downloading contents.
FIG. 8 illustrates a screen image related to a history service providing history information.

### Best Mode

An IP broadcast receiver and method for providing a service in the IP broadcast receiver according to exemplary embodiments of the present invention will now be described in detail with reference to the accompanying drawings.

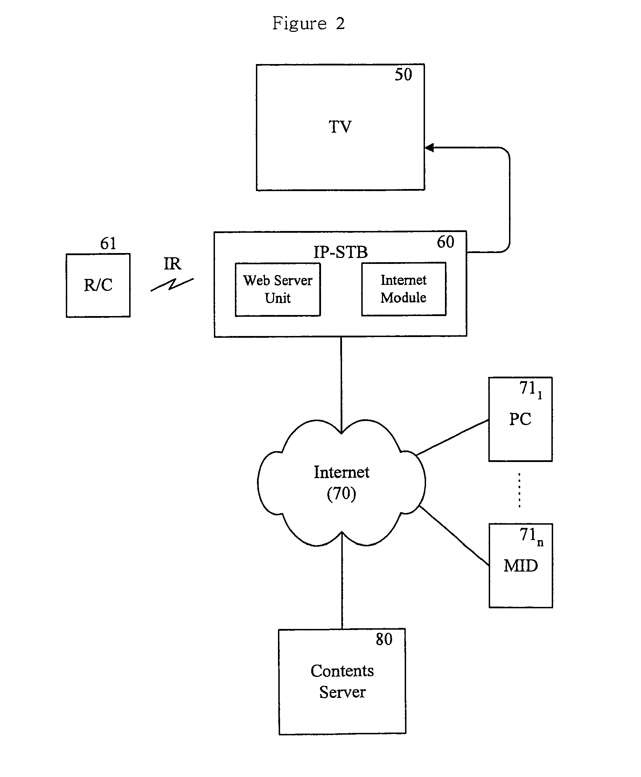

The present invention may be applicable to various types of IP broadcast receivers such as an IP television (IP TV), an IP set-top box (IP STB), and the like. For example, as shown in FIG. 2, the IP STB 60 according to an embodiment of the present invention may include an Internet module and a Web server unit.

The IP STB 60 is connected to a TV 50 and to a contents server 80 of an Internet broadcast station providing various contents and broadcast program data via the Internet 70.

Also, as shown in FIG. 2, terminals 71₁∼71n such as personal computers (PCs) may be connected to the IP STB 60 via the Internet 70 to transmit and receive information related to the IP broadcast service, and in this case, if the IP STB 60 includes a mobile communication module, e.g., a CDMA module, a communication terminal such as a personal data assistant (PDA) or a mobile phone can receive information related to the IP broadcast service and provide information to the IP STB 60 via a mobile communication network.

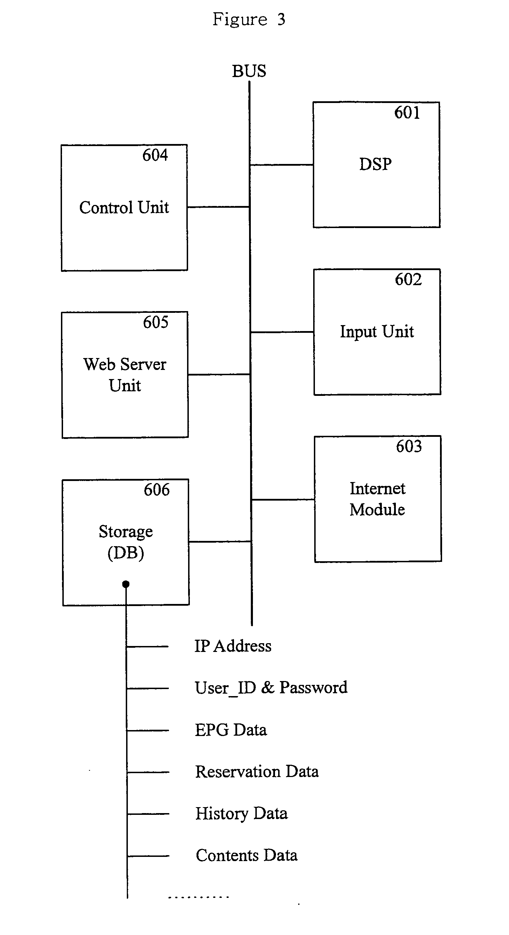

As shown in FIG. 3, the IP STB 60 may include a digital signal processor (DSP) 601, an input unit 602 for receiving a command related to function manipulation of the IP STB 60, an Internet module 603, a control unit 604 for performing a major function of the IP STB 60 by controlling each element, a Web server unit 605, and a storage 606, which are connected via a bus line.

As the storage 606, a hard disk (HDD), a flash memory, and the like, may be used, and as shown in FIG. 3, multiple information such as an IP address, a user_ID and password, EPG data, reservation data, history data, and the like, are managed as database in the storage 606. Also, various contents data obtained by recording an IP broadcast or uploaded by the user may be stored in the storage 606.

When the terminal is connected via the Internet module 603, the Web server unit 605 transmits a previously set initial screen image to the terminal in order to the screen image to be displayed on the terminal. The initial screen image may be arbitrarily edited by the user by manipulating the remote controller 61. Alternatively, a plurality of initial screen images may be previously edited and stored in the storage 606, one of which may be selected to be provided to the terminal.

The storage 606 may store several initial screen images of similar content in various resolutions. Namely, the storage unit 606 may store an initial screen image of a medium size to be provided to a mobile Internet device (MID) such as a portable multimedia player (PMP) supporting the wireless Internet, and an initial screen image of a small size to be provided to the mobile communication terminal, as well as an initial screen image of a general size to be provided to the terminal such as a PC or a notebook computer. The Web server unit 605 may selectively provide an initial screen image of proper resolution according to a type of a connected terminal.

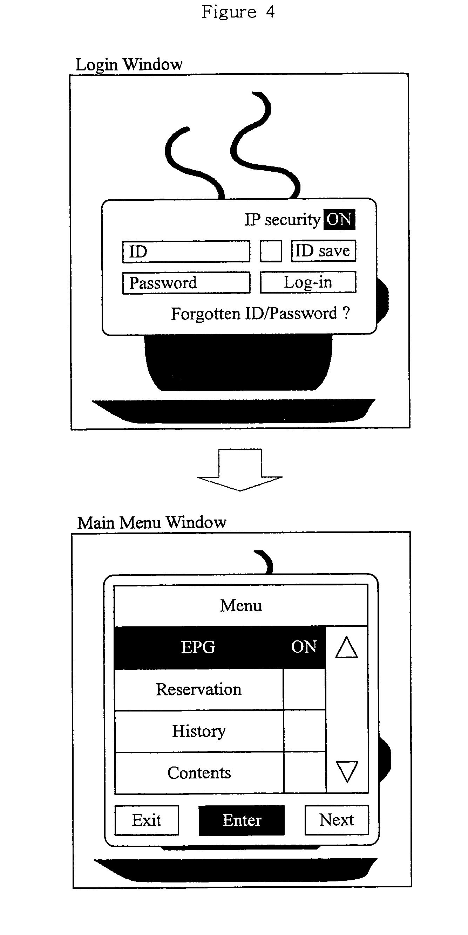

With reference to FIG. 4, the initial screen image may include a login window requesting inputting of a user ID and a password to receive a user ID and a password inputted by the user. If the received user ID and password inputted by the user are valid user ID and password managed by the database in the storage 606, the Web server unit 605 provides the services according to the present invention to the connected terminal.

For example, as shown in FIG. 4, the Web server unit 605 may transmit a menu screen image allowing selection of various services such as EPG, Reservation, History, Contents, and the like, to the terminal, and provides a service selected by the user. In addition, the user may perform editing operations such as adding a new item to the menu screen or deleting an existing item. This will be described in detail as follows.

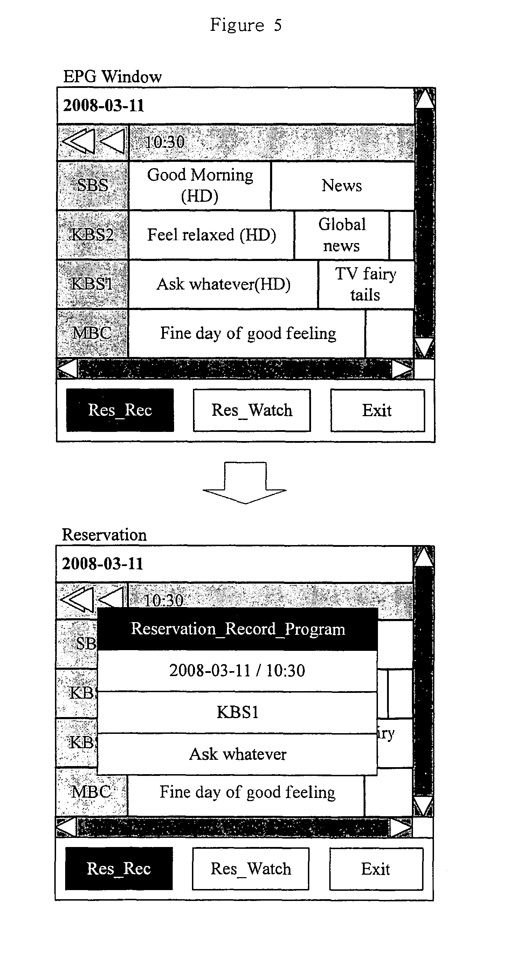

FIG. 5 illustrates screen images related to the EPG service providing EPG information. As mentioned above with reference to FIG. 4, when the user requests an EPG service through a menu screen image transmitted to the terminal, the Web server unit 605 checks a current date and time and receives EPG data, a broadcast program guide information corresponding to the current date and time (e.g., 10:30 a.m., March 11, 2008), from the contents server 80 connected via the Internet module 603. The current date and time may be managed by a timer installed in the IP STB 60, or may be checked through time information included in a data stream of the transmitted broadcast program.

The EPG data may be intermittently included in a data stream of a previously received broadcast program or in the data stream of the currently transmitted broadcast program, so the EPG data may be managed by date and time in the database of the storage 606, without the necessity for the Web server unit 605 to request the EPG data from the contents server 80. The Web server unit 605 searches and reads the EPG data managed in the database.

The Web server unit 605 processes the EPG data received from the contents server 80 or read from the database to generate an EPG screen image, and transmits the generated EPG screen image to the terminal. For example, as shown in FIG. 5, the EPG screen image may include broadcast program guide information such as pertinent date and time information, broadcast channels, the name of broadcast stations, a broadcast time, the title of programs.

In addition, the EPG screen image may include user selection items such as a reservation record, reservation watch, and the like. If the user selects the reservation record in a state that a certain program has been selected, the Web server unit 605 extracts a broadcast date and time, a broadcast channel, the name of a broadcast station, the title of a program, and the like, corresponding to the selected program, and stores the same as reservation record data in the database of the storage 606.

Likewise, if the user selects the reservation watch in a state that a certain program has been selected, the Web server unit 605 extracts a broadcast date and time, a broadcast channel, the name of a broadcast station, the title of a program, and the like, corresponding to the selected program, and stores the same as reservation watch data in the database of the storage 606.

In storing the reservation record data or the reservation watch data in the storage 606, the Web server unit 605 may store EPG data corresponding to the EPG screen image in association with the reservation record data or the reservation watch data.

Accordingly, the user, who is in a remote area away from the IP STB, can check various broadcast program information through the EPG screen image displayed on the terminal, and he can simply set the reservation record or reservation watch with respect to his desired broadcast program.

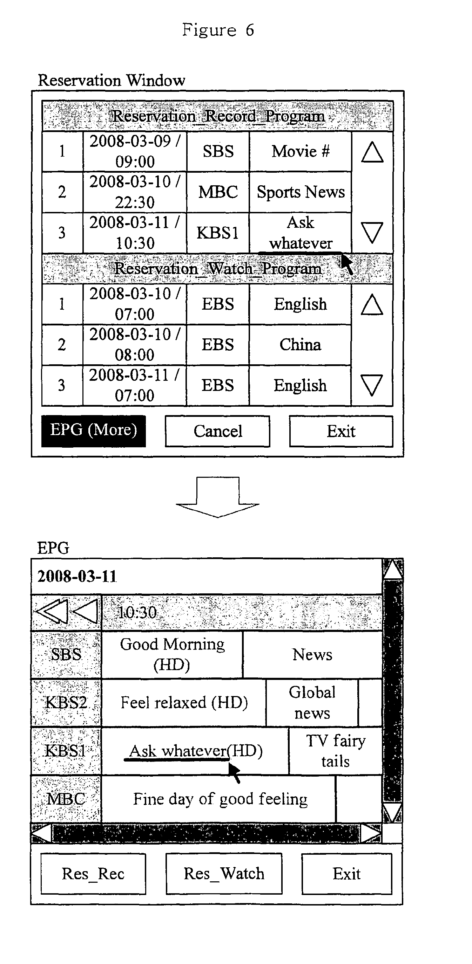

FIG. 6 illustrates screen images related to the reservation service providing reservation information. As discussed above with reference to FIG. 4, when the user requests the reservation service through a menu screen image transmitted to the terminal, the Web server unit 605 reads the reservation record data and the reservation watch data managed in the database of the storage 606.

In addition, the Web server unit 605 processes the read reservation record data and the reservation watch data to generate a reservation screen image, and transmits the generated reservation screen image to the terminal. For example, as shown in FIG. 6, the reservation screen image may include reservation record or reservation watch broadcast program information, such as reservation dates and time with respect to the reservation record programs and reservation watch programs, the name of broadcast stations, the title of programs, displayed in the form of a list.

In addition, the reservation screen image may include, for example an EPG detailed item, cancel item, and the like. When the user selects the EPG detailed item in a state that a reservation record broadcast program has selected, the Web server unit 605 reads EPG data corresponding to the selected reservation record broadcast program from the database of the storage 606 or performs an interface operation with the contents server 80 to receive EPG data corresponding to the reservation record broadcast program.

In addition, the Web server unit 605 processes the EPG data which has been read from the database or received from the contents server 80 to generate an EPG screen image, and transmits the generated EPG screen image to the terminal. For example, as shown in FIG. 6, the EPG screen image may include the broadcast program guide information such as broadcast date and time information with respect to the reservation record broadcast program, broadcast channels, the name of broadcast stations, broadcast time, the tile of programs, and the like, as displayed.

Accordingly, the user can simply check the broadcast program information set as the current reservation record or reservation watch through the reservation screen image displayed on the terminal and check the detailed broadcast program information through the EPG screen image. Also, the user may cancel a broadcast program unnecessarily set as the reservation record or reservation watch.

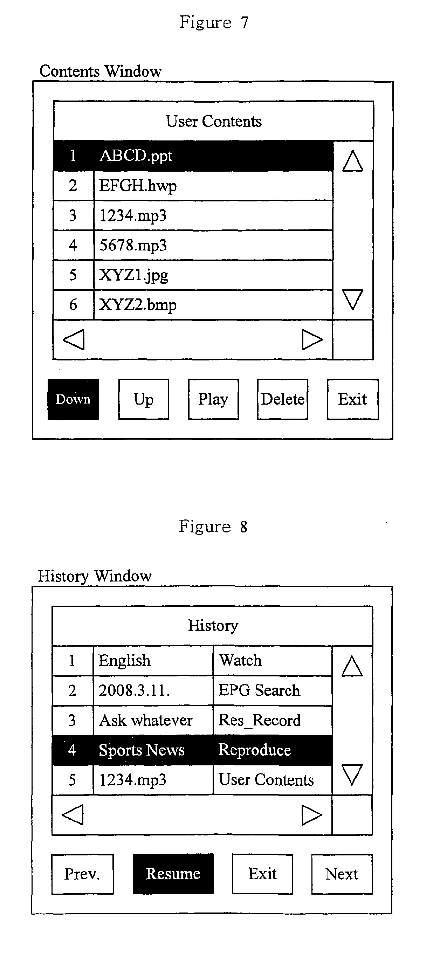

FIG. 7 illustrates a screen image related to a contents service for uploading or downloading contents. For example, as stated above with reference to FIG. 4, when the user requests the contents service through a menu screen image transmitted to the terminal, the Web server unit 605 searches and reads the contents managed in the storage 606.

The Web server unit 605 processes the read user contents data to generate a contents screen image, and transmits the generated contents screen image to the terminal. For example, as shown in FIG. 7, the contents screen image may include a broadcast program file recorded through the IP broadcast receiver, a contents file or a data file uploaded by the user, and the like, displayed in the form of a list.

The Web server unit 605 may perform operations such as deleting, playing, downloading to the terminal, and the like, according to a user manipulation with respect to a contents file selected from the displayed list. Also, the Web server unit 605 may upload the contents file or the data file from the terminal and store the same in the storage 606.

Accordingly, the user may check various contents stored in the storage 606 through the contents screen image provided to the terminal, and download or upload a certain contents file.

FIG. 8 illustrates a screen image related to the history service providing history information. As described above with reference to FIG. 4, when the user requests the history service through a menu screen image transmitted to the terminal, the Web server unit 605 reads history data managed in the database of the storage 606.

The Web server unit 605 processes the read history data to generate a history screen image, and transmits the generated history screen image to the terminal. For example, as shown in FIG. 8, the history screen image may include information related to various functions and operations which have been previously performed, as displayed in the form of a list.

When one of the history items is selected, the Web server unit 605 displays detailed content of the selected item through a pop-up window and the like for user checking. When Resume is selected in the state that one item has been selected, the Web server unit 605 executes again the operation with respect to the corresponding item. For example, if the selected item is reproducing of contents stored in the storage 606, the Web server unit 605 may reproduce the corresponding contents and transmits the same to the terminal.

Accordingly, the user can simply check the information related to various functions and operations which have been previously performed, through the history screen image displayed on the terminal, and may simply perform again a certain function or operation.

For reference, even in a state that main power of the IP STB 60 is turned off, the Web server unit 605 may provide various services as mentioned above by using power continuously supplied to a power supply unit.

The preferred embodiments of the present invention have been described with reference to the accompanying drawings, and it will be apparent to those skilled in the art that various modifications and variations can be made in the present invention without departing from the scope of the invention. Thus, it is intended that any future modifications of the embodiments of the present invention will come within the scope of the appended claims and their equivalents.

## Claims

1. A method for providing a service in an IP broadcast receiver, the method comprising:
providing, via a server unit provided in the IP broadcast receiver, information related to an IP broadcast and/or the IP broadcast receiver to a terminal connected to a communication network; and
performing a service related to the IP broadcast and/or the IP broadcast receiver according to a request of the terminal.

2. The method of claim 1, wherein the information provided to the terminal comprises a menu allowing a user to select one or more services from among an EPG service, a reservation service, history service, and contents uploading/downloading service.

3. The method of claim 2, wherein the providing step provides a menu screen image with resolution corresponding to the connected terminal.

4. The method of claim 2, wherein the performing step comprises:
if the EPG service is requested through the menu, searching and reading EPG information corresponding to a current time from a database of the receiver or receiving EPG information from a contents server connected via the Internet and providing the EPG information to the terminal.

5. The method of claim 4, wherein the performing step comprises:
if the terminal requests reservation record or reservation watch with respect to at least one program selected from the EPG information, storing broadcast information with respect to the selected program as reservation record data or reservation watch data.

6. The method of claim 2, wherein the performing step comprises:
if the reservation service is requested through the menu, providing reservation record data or reservation watch data set in the receiver to the terminal.

7. The method of claim 2, wherein the performing step comprises:
if the history service is requested through the menu, providing history data managed in the receiver to the terminal.

8. The method of claim 2, wherein the performing of the service comprises:
if the contents uploading/downloading service is requested through the menu, providing a list of contents data stored in the receiver to the terminal, and downloading contents selected from the list or uploading contents stored in the terminal.

9. An IP broadcast receiver comprising:
a communication module configured to connect to and transmit/receive data to/from a terminal and a convents server via a communication network;
a server unit configured to provide one or more services among an EPG service, a reservation service, history service, and contents service related to an IP broadcast and/or the IP broadcast receiver via an interface with the terminal; and
a storage unit configured to store the IP broadcast program and the service-related information.

10. The receiver of claim 9, wherein the storage unit stores a menu screen image allowing selecting of one or more services from among an EPG service, a reservation service, a history service, and a contents uploading/downloading service, and the server unit provides the menu screen image to the terminal.

11. The receiver of claim 10, wherein the storage unit stores the menu screen image with a plurality of resolutions, and the server unit provides a menu screen image with a resolution corresponding to the connected terminal.

12. The receiver of claim 10, wherein when the EPG service is requested by the terminal through the menu, the server unit searches and reads EPG information corresponding to a current time from the storage unit, or receives EPG information from the contents server and provides the EPG information to the terminal.

13. The receiver of claim 10, wherein when the terminal requests reservation record or reservation watch with respect to at least one program selected from EPG information, the server unit stores broadcast information with respect to the selected program as reservation record data or reservation watch data in the storage unit.

14. The receiver of claim 10, wherein when the reservation service is requested by the terminal through the menu, the server unit searches the reservation record data or the reservation watch data stored in the storage unit and provides the searched reservation record data or reservation watch data to the terminal.

15. The receiver of claim 10, wherein when the terminal requests the contents uploading/downloading service via the menu, the server unit provides a list of contents data stored in the storage unit to the terminal, reads contents selected from the list from the storage unit and transmits the read contents to the terminal or receives contents from the terminal and stores the received contents in the storage unit, according to a request from the terminal.
